(19) **Europäisches Patentamt**
**European Patent Office**
**Office européen des brevets**

(11) **EP 1 733 521 B1**

(12) **EUROPEAN PATENT SPECIFICATION**

(45) Date of publication and mention
of the grant of the patent:
**30.12.2009 Bulletin 2009/53**

(51) Int Cl.:
**H04L 12/58** (2006.01)

(21) Application number: **05725801.4**

(86) International application number:
**PCT/US2005/008864**

(22) Date of filing: **16.03.2005**

(87) International publication number:
**WO 2005/091580 (29.09.2005 Gazette 2005/39)**

(54) **A METHOD AND AN APPARATUS TO CLASSIFY ELECTRONIC COMMUNICATION**

VERFAHREN UND VORRICHTUNG ZUM KLASSIFIZIEREN ELEKTRONISCHER KOMMUNIKATION

PROCEDE ET APPAREIL POUR CLASSER UNE COMMUNICATION ELECTRONIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **16.03.2004 US 553743 P**
**15.03.2005 US 81287**

(43) Date of publication of application:
**20.12.2006 Bulletin 2006/51**

(73) Proprietor: **Cloudmark, Inc.**
**San Francisco, CA 94107 (US)**

(72) Inventor: **PRAKASH, Vipul, Ved**
**San Francisco, CA 94107 (US)**

(74) Representative: **McLeish, Nicholas Alistair Maxwell**
**Boult Wade Tennant**
**Verulam Gardens**
**70 Gray's Inn Road**
**London WC1X 8BT (GB)**

(56) References cited:
**EP-A- 1 484 893      EP-A- 1 509 014**
**WO-A-03/071753      US-A- 6 161 130**

- **DAVID H CROCKER: "STANDARD FOR THE FORMAT OF ARPA INTERNET TEXT MESSAGES" IETF STANDARD, INTERNET ENGINEERING TASK FORCE, IETF, CH, 13 August 1982 (1982-08-13), XP015006807 ISSN: 0000-0003**

## Description

### FIELD OF INVENTION

The present invention relates to electronic communication, and more particularly, to classifying electronic communication.

### BACKGROUND

Today, the use of electronic communication has become increasingly popular for both personal purposes and work related purposes. The term "electronic communication" as used herein is to be interpreted broadly to include any type of electronic communication or message including voice mail communications, short message service (SMS) communications, multimedia messaging service (MMS) communications, facsimile communications, etc. With the increasing popularity of electronic communication, more marketers send spam to advertise their products and/or services. As used herein, the term "spam" refers to electronic communication that is not requested and/or is non-consensual. Also known as "unsolicited commercial e-mail" (UCE), "unsolicited bulk e-mail" (UBE), "gray mail" and just plain "junk mail", and spam is typically used to advertise products.

However, the mass distribution of spam causes many users not only nuisance, but costly problems as well. Therefore, many software applications have been developed to filter out spam from incoming electronic communication. Unfortunately, one typical side effect of these spam filtering software applications is that some legitimate electronic communications may be mistakenly filtered out with the spam because of false positives generated by the spam filtering software application. For example, some existing spam filtering software applications may mistakenly block a legitimate electronic newsletter because of some spam-like characteristics in the legitimate electronic newsletter, such as a large list of recipients. At best, a user may have to manually retrieve the legitimate electronic communication from a location designated for spam and/or to override the determination by the spam filtering software. At worst, the user may not even know that the legitimate electronic communication is mistakenly filtered out if the spam filtering software has caused the legitimate electronic communication to be deleted without notifying the user.

WO 03/071753, which represents prior art under Rule 43(1)(a) EPC, describes the classification of received electronic mails according to relay path information included in the headers.

### SUMMARY

The present invention provides a method according to claim 1, a machine-accessible medium according to claim 6, and a system according to claim 7.

The present invention includes a method and an apparatus to classify electronic communications. In one embodiment, the method includes tokenizing a set of one or more headers in an electronic communication to generate a first set of one or more tokens and comparing the first set of tokens with a second set of one or more tokens to determine whether the electronic communication is in a predetermined category.

Other features of the present invention will be apparent from the accompanying drawings and from the detailed description that follows.

### BRIEF DESCRIPTION OF THE DRAWINGS

The present invention is illustrated by way of example and not limitation in the figures of the accompanying drawings, in which like references indicate similar elements and in which:

Figure 1A illustrates a flow diagram of one embodiment of a process to classify electronic communication;

Figure 1B shows one exemplary electronic communication network;

Figure 2 illustrates a flow diagram of one embodiment of a process to tokenize a header in electronic communication;

Figure 3A shows one example of a set of Received headers in an exemplary email;

Figure 3B shows one exemplary set of tokens generated from the Received headers shown in Figure 3A according to one embodiment of the present invention; and

Figure 4 illustrates one embodiment of an electronic communication system.

### DETAILED DESCRIPTION

A method and an apparatus to classify electronic communications are described. In one embodiment, the method includes tokenizing a set of one or more headers in an electronic communication to generate a first set of one or more tokens and comparing the first set of tokens with a second set of one or more tokens to determine whether the electronic communication is in a predetermined category.

In the following description, numerous specific details are set forth. However, it is understood that embodiments of the invention may be practiced without these specific details. In other instances, well-known components, structures, and techniques have not been shown in detail in order not to obscure the understanding of this description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification do not necessarily all refer to the same embodiment.

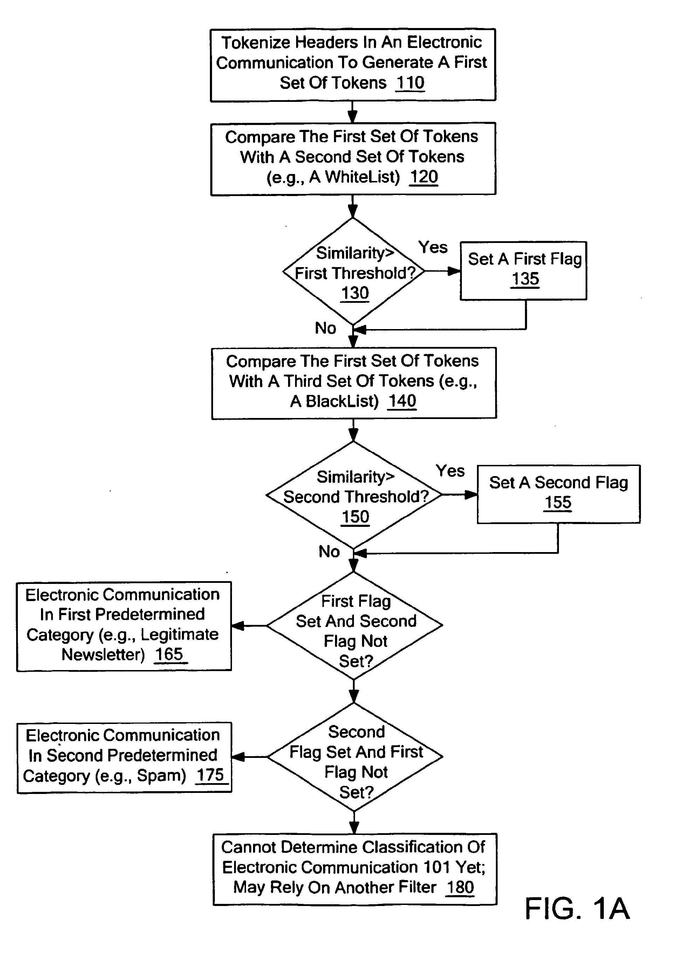

**Figure 1A** shows a flow diagram of one embodiment of a process for classifying electronic communication. The process is performed by processing logic that may comprise hardware (e.g., circuitry, dedicated logic, etc.), software (such as is run on a general-purpose computer system or a dedicated machine), or a combination of both.

Processing logic tokenizes a set of one or more headers in an electronic communication received at an electronic communication client application (e.g., an email software) to generate a first set of one or more tokens (processing block 110). The electronic communication may contain various types of headers that are hard to forge. For email communications the headers that are hard to forge are received headers. As a result, the following discussion will focus on the Received headers. However, it should be appreciated that the technique disclosed herein is applicable to other types of headers as appropriate.

During tokenization, processing logic may extract some predetermined information from the headers. However, in one embodiment, if a certain value is missing in one of the headers, processing logic may ignore this header and generate no token from this header. Processing logic may generate as many tokens as the relevant information is available in the headers by going through every Received header in the electronic communication.

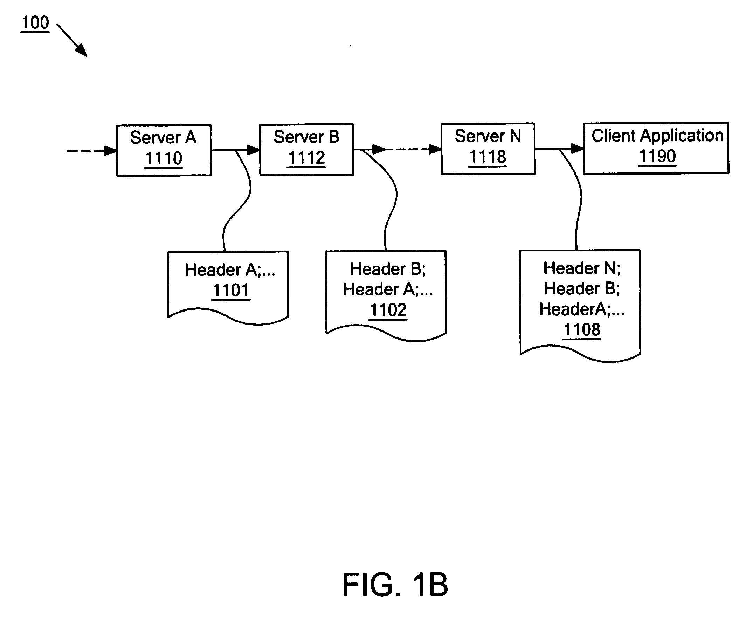

In addition to information within an individual header, processing logic may extract the order of a header within the set of headers in the electronic communication and encode the order extracted into the tokens. With respect to Received headers the order of the headers is useful in determining the route the electronic communication has taken to reach the client application. Figure 1B shows an exemplary embodiment of an electronic communication network to illustrate this concept.

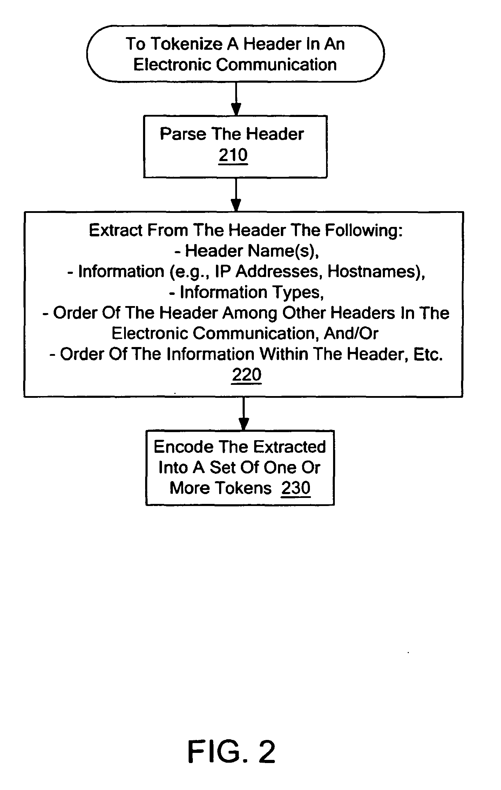

Referring to Figure 1B, the electronic communication network 100 includes a number of servers (e.g., server A 1110, server B 1112, server N 1118) and a client application 1190. The electronic communications 1101, 1102, 1108 are routed via the servers to the client application 1190. When one electronic communication is routed through a server, the server adds a Received header that includes various information of the server (e.g., hostname, IP address, etc.) into the electronic communication. For instance, server A 1110 adds Header A into the electronic communication 1101, server B 1112 adds Header B to the electronic communication 1102, and server N 1118 adds Header N to the electronic communication 1108. Note that the order of the headers (e.g., Header A, Header B, Header N) in the electronic communication 1108 corresponds to the order in which the electronic communication 1108 has passed through the servers. Therefore, the client application 1190 may determine the route the electronic communication 1108 has taken to reach the client application 1190 using the order of the headers in the electronic communication 1108. Hence, processing logic encodes the order of the headers in the tokens generated from the headers. More detail on the tokenization of a header is discussed below with reference to Figure 2.

Referring back to Figure 1A, processing logic may compare the first set of tokens with a second set of tokens (processing block 120). In one embodiment, the second set of tokens is generated from another known electronic communication in the first predetermined category. In one embodiment, the first predetermined category includes legitimate electronic communications, and hence, the second set is referred to as a "White List." For example, the first predetermined category may include legitimate electronic newsletters that the user of the client application wants to receive and the second set of tokens is generated from a set of one or more headers in one of these legitimate electronic newsletters.

Processing logic then determines whether the similarity between the first and the second sets of tokens exceeds a first predetermined threshold, such as 95% (processing block 130). If the similarity exceeds the first predetermined threshold, then processing logic sets a first flag (processing block 135). Otherwise, the first flag is left unset. Various approaches may be used to determine the similarity between two sets of tokens. For example, one may use the following quantitative metric, *sim*, for similarity between two sets of tokens, A and B:

$$\mathrm{sim} = |\mathrm{intersect}(A,B)|/\mathrm{sqrt}(|A|)*\mathrm{sqrt}(|B|),$$

where |x| means the size of the set x.

According to the above equation, the quantitative metric for similarity can be thought of as a dot product of the two sets of tokens (i.e., set A and set B) divided by the product of the magnitude of the two sets. Furthermore, tf-idf weighting may be used in the determination of the similarity between two sets of tokens in order to de-emphasize commonly occurring features and emphasize relatively rare features in the two sets of tokens.

As discussed above, the tokens may include the order of the headers, which may correspond to the route the electronic communication has taken. Therefore, if the first set of tokens is substantially similar to the tokens of a known legitimate electronic communication, the electronic communication received is likely to have been routed through many of the servers used by the known legitimate electronic communication in a substantially similar order. Hence, the electronic communication 1101 is likely to be legitimate as well. However, to prevent a spammer from defeating the mechanism by forging the headers in a spam, processing logic may also compare the first set of tokens with a third set of tokens (processing block 140). Order encoding also prevents attacks from spammers who could insert fake headers crafted to provide legitimacy to the email. Spammers have no control over the order in which their headers will appear, and they can not force the same order present in legitimate communications.

In one embodiment, the third set of tokens is generated from another known electronic communication in a second predetermined category. The second predetermined category may include electronic communications to be filtered out, such as spams. Hence, the third set of tokens may also be referred to as a "Black List." Processing logic may determine whether the similarity between the first set of tokens and the third set of tokens exceeds a second predetermined threshold (processing block 150). In one embodiment, the second predetermined threshold is approximately at or above 95%. However, one should appreciate that the first and second predetermined thresholds may or may not be the same. If the similarity exceeds the second predetermined threshold, then processing logic may set a second flag (processing block 155). Furthermore, one should appreciate that the order in which processing logic compares the first set of tokens with the White List or the Black List may be switched in some embodiments.

Based on the results of comparing the first set of tokens with the White List or the Black List, processing logic may then classify the electronic communication. If the first flag is set but not the second flag, then processing logic may classify the electronic communication to be in the first predetermined category (processing block 165). For example, the second set of tokens are generated from a known legitimate newsletter and the third set of tokens are generated from a known spam. Setting the first flag indicates that the tokens of the electronic communication is substantially similar to the tokens of the legitimate newsletter. Thus, the electronic communication is likely to have been routed through many of the servers used by the legitimate newsletter in a substantially similar order.

Referring back to Figure 1A, if the second flag is set but not the first flag, then processing logic may classify the electronic communication to be in the second predetermined category (processing block 175). However, if both the first and the second flags are set or both flags are not set, then processing logic cannot decide whether the electronic communication is in the first or the second predetermined category based on the comparisons of the tokens. Therefore, processing logic may rely on an electronic communication filtering mechanism to classify the electronic communication (processing block 180). In one embodiment, processing logic may rely on classification provided by a community of users reporting electronic communications of a certain category, such as SpamNet provided by Cloudmark, Inc. in San Francisco, California.

*Figure 2 illustrates a flow diagram of one embodiment of a process to tokenize a header (e.g., a Received header) in an electronic communication. The process is performed by processing logic that may comprise hardware (e.g., circuitry, dedicated logic, etc.), software (such as is run on a general-purpose computer system or a dedicated machine), or a combination of both.*

Referring to Figure 2, processing logic parses the header (processing block 210). Then processing logic extracts from the parsed header some predetermined information, such as hostnames and Internet Protocol (IP) addresses from a Received header (processing block 220).

In addition to extracting the information, processing logic may extract from the header one or more header names, one or more information types, the order of the information within the header, and the order of the header among a set of headers in the electronic communication (processing block 220). The order of the header among a set of headers in the electronic communication is useful for determining the route the electronic communication has traveled as explained above. In one embodiment, processing logic classifies an electronic communication received based on how similar the route the electronic communication has traveled is to the route of one or more known electronic communication (e.g., spams, legitimate electronic newsletter, etc.).

Then processing logic encodes the extracted information, the header names, information types, the order of the information within the header, and the order of the header among the set of headers into a set of one or more tokens (processing block 230). In one embodiment, the structure of a token is in the form of [header_name]-[information_type]-[information].

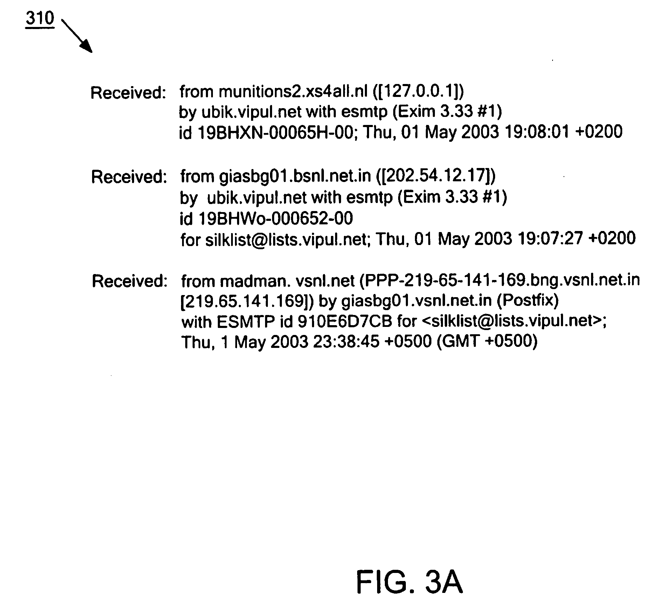

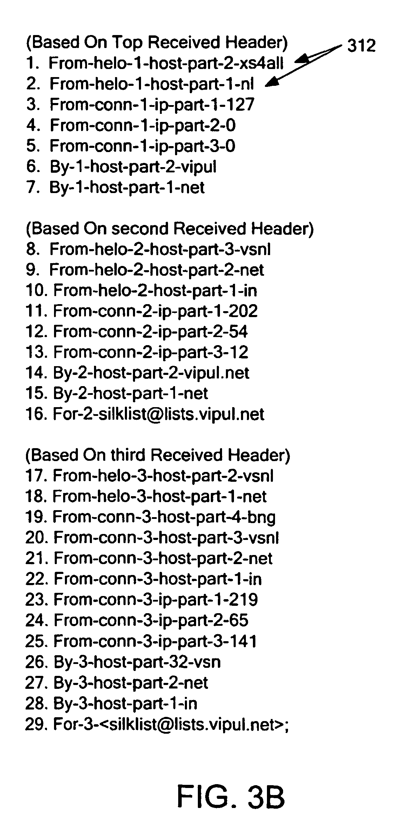

Some predetermined information in the header may be encoded in multiple tokens. In one embodiment, the hostnames and IP addresses in a Received header may be broken into multiple tokens to allow identification of partially matching hostnames and/or IP addresses. **Figure 3A** shows one example of a set of Received headers in an representative email. **Figure 3B** shows a sample set of tokens generated from the Received headers in Figure 3A according to one embodiment of the present invention. Referring to Figure 3A, the hostname 310 of the first Received header is broken into the multiple tokens 312 in Figure 3B.

In some embodiments, a predetermined portion of some information in the header may be dropped such that no token is generated from the dropped portion. For example, the hostname portion of the hosts and/or the lowest octet of the IP addresses in a Received header may be dropped to remove some potential sources of noise from the Received header. Referring back to Figures 3A and 3B, the hostname portion of the hosts in the Received headers may be dropped (e.g., "munitions2" in the first Received header in Figure 3A) to remove a potential source of noise from the headers. Likewise, the lowest octet of an IP address (e.g., "1" in the first Received header in Figure 3A) may also be dropped.

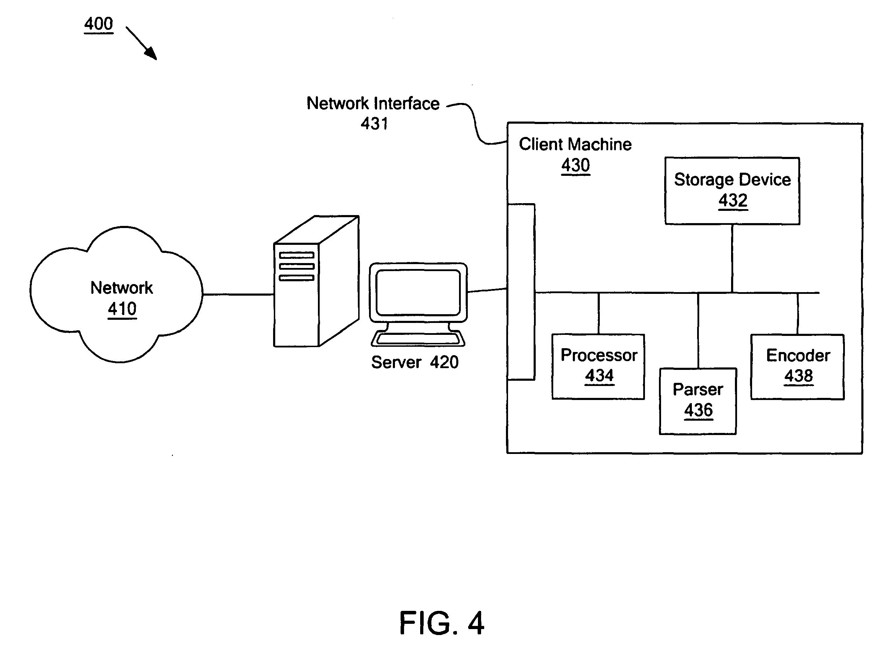

**Figure 4** illustrates one embodiment of an electronic communication system usable with the present invention. The system 400 includes a network 410, an electronic communication server 420, and a client machine 430. The network 410 may include additional electronic communication servers to route electronic communication. The electronic communication server 420 is coupled to the client machine 430. The client machine 430 may include a personal computer.

In one embodiment, the client machine 430 includes a storage device 432, a processor 434, a parser 436, and an encoder 438. Note that the components within the client machine 430 may be implemented by hardware (e.g., a dedicated circuit), software (such as is run on a general-purpose machine), or a combination of both. The network interface 431 is operable to receive electronic communication from the server 420. The parser 436 may parse a set of one or more headers in the electronic communication received to extract some predetermined types of information. The encoder 438 may encode the extracted information to generate a set of tokens for the electronic communication received. The storage device 432 may store one or more sets of predetermined tokens. The processor 436 is operable to compare the stored tokens with the tokens generated from the headers in the electronic communication received. Based on the comparison, the processor 436 may classify the electronic communication received to be in a predetermined category. Some embodiments of the process to classify the electronic communication and the process to tokenize a header have been discussed above.

Note that any or all of the components and the associated hardware illustrated in Figure 4 may be used in various embodiments of the networked system 400. In one embodiment, the networked system 400 may be a distributed system. Some or all of the components in the networked system 400 (e.g., the electronic communication server 420) may be local or remote. However, it should be appreciated that other configuration of the networked system may include one or more additional devices not shown in **Figure 4.**

One advantage of classifying an electronic communication based on tokens generated from the headers in the electronic communication is to avoid mistakenly classifying legitimate electronic newsletter or electronic communications having a relatively large mailing list as spams.

Some portions of the preceding detailed description have been presented in terms of algorithms and symbolic representations of operations on data bits within a computer memory. These algorithmic descriptions and representations are the tools used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be kept in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to an apparatus for performing the operations described herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the operations described. The required structure for a variety of these systems will appear from the description below. In addition, the present invention is not described with reference to any particular programming language. It will be appreciated that a variety of programming languages may be used to implement the teachings of the invention as described herein.

A machine-accessible medium includes any mechanism for storing or transmitting information in a form readable by a machine (e. g. , a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

The foregoing discussion merely describes some exemplary embodiments of the present invention. One skilled in the art will readily recognize from such discussion, the accompanying drawings and the claims that various modifications can be made without departing from the scope of protection as defined in the claims.

**Claims**

1. A method comprising:

    tokenizing a set of routing information contained in or associated with an electronic message to generate a first set of one or more tokens (110), wherein the set of routing information is a plurality of header fields (1101, 1102, 1108, 310); comparing, using a quantitative similarity comparison, the first set of one or more tokens with a second set of one or more tokens that represent a predetermined category (120, 140); and classifying the electronic message into the predetermined category if the quantitative similarity comparison between the first and second sets of one or more tokens exceeds a predetermined threshold (165, 175),
    **characterised in that** tokenizing comprises:

        parsing the set of routing information (210); extracting from the set of routing information at least one of routing information header field names, data contained in routing information header fields, one or more data types, order of the data within the routing information header fields, or order of the routing information header fields (220); and encoding the extracted routing information data into the first set of one or more tokens (230).

2. The method of claim 1, further comprising:

    comparing the first set of one or more tokens to multiple sets of one or more tokens (312), each of the multiple sets of one or more tokens (312) representing a predetermined category for classifying the electronic message.

3. The method of claim 1 wherein the electronic message is an electronic mail (email) and the headers are Received header fields (310).

4. The method of claim 1, wherein the routing information includes one or more hostnames and one or more Internet Protocol (IP) addresses of one or more servers the electronic message has been routed through (1110, 1112, 1118).

5. The method of claim 1, wherein the step of encoding the extracted routing information into the first set of one or more tokens (230) is performed based on the header field name, information type, order of the information within the header field, and the order of the header field among the plurality of header fields.

6. A machine-accessible medium that provides instructions that, when executed by a processor, causes the processor to perform all the steps of a method according to any of claims 1-5.

7. A system comprising:

    a means for tokenizing a set of routing information contained in or associated with an electronic message to generate a first set of one or more tokens (110), wherein the set of routing information is a plurality of header fields (1101, 1102, 1108, 310);
    a means for comparing, using a quantitative similarity comparison, the first set of one or more tokens with a second set of one or more tokens that represent the predetermined category (120, 140); and
    a means for classifying the electronic message into the predetermined category if the quantitative similarity comparison between the first and second sets of one or more tokens exceeds a predetermined threshold (165, 175),
    **characterised in that** the means for tokenizing comprises:

        a means for parsing the set of routing information (210);
        a means for extracting from the set of routing information at least one of routing information header field names, data contained in routing information header fields, one or more data types, order of the data within the routing information header fields, or order of the routing information header fields (220); and
        a means for encoding the extracted routing information data into the first set of one or more tokens (230)

8. The system of claim 7 wherein the electronic message is an electronic mail (email) and the header fields are Received header fields (310).

9. The system of claim 7, wherein the means for encoding the extracted routing information data into the first set of one or more tokens are adapted to encode based on the header field name, information type, order of the information within the header field, and the order of the header field among the plurality of header fields (230).

**Patentansprüche**

1. Verfahren, umfassend:

Tokenisieren eines Satzes von Leitinformation, die in einer elektronischen Meldung enthalten oder dieser zugeordnet ist, um einen ersten Satz von einem oder mehreren Token zu erzeugen (110), wobei der Satz von Leitinformation eine Mehrzahl von Kopffeldern (1101, 1102, 1108, 310) ist;

Vergleichen des ersten Satzes von einem oder mehreren Token mit einem zweiten Satz von einem oder mehreren Token, die eine vorbestimmte Kategorie repräsentieren, unter Anwendung eines quantitativen Ähnlichkeitsvergleichs (120, 140); und

Klassifizieren der elektronischen Meldung in die vorbestimmte Kategorie, wenn der quantitative Ähnlichkeitsvergleich zwischen dem ersten und dem zweiten Satz von einem oder mehreren Token einen vorbestimmten Schwellenwert überschreitet (165, 175),

**dadurch gekennzeichnet, dass** das Tokenisieren umfasst:

Analysieren des Satzes der Leitinformation (210), Extrahieren von Leitinformation-Kopffeldnamen und/oder in den Leitinformation-Kopffeldern enthaltenen Daten und/oder einem oder mehreren Datentypen und/oder der Reihenfolge der Daten innerhalb der Leitinformation-Kopffelder und/oder der Reihenfolge der Leitinformation-Kopffelder aus dem Satz von Leitinformation (220); und

Kodieren der extrahierten Leitinformationsdaten in den ersten Satz von einem oder mehreren Token (230).

2. Das Verfahren von Anspruch 1, ferner umfassend:

Vergleichen des ersten Satzes von einem oder mehreren Token mit mehreren Sätzen von einem oder mehreren Token (312), wobei jeder der mehreren Sätze von einem oder mehreren Token (312) eine vorbestimmte Kategorie repräsentiert, um die elektronische Meldung zu klassifizieren.

3. Das Verfahren von Anspruch 1, worin die elektronische Meldung eine elektronische Post (e-mail) ist und die Köpfe empfangene Kopffelder (310) sind.

4. Das Verfahren von Anspruch 1, worin die Leitinformation einen oder mehreren Hostnamen und eine oder mehrere Internetprotokoll (IP)-Adressen von einem oder mehreren Servern enthält, durch die die elektronische Meldung geleitet worden ist (1110, 1112, 1118).

5. Das Verfahren von Anspruch 1, worin der Schritt des Kodierens der extrahierten Leitinformation in den ersten Satz von einem oder mehreren Token (230) auf der Basis des Kopffeldnamens, des Informationstyps, der Reihenfolge der Information innerhalb des Kopffelds und der Reihenfolge des Kopffelds unter der Mehrzahl von Kopffeldern durchgeführt wird.

6. Maschinenzugreifbares Medium, das Instruktionen liefert, die dann, wenn sie von einem Prozessor ausgeführt werden, bewirken, dass der Prozessor alle Schritte eines Verfahrens gemäß einem der Ansprüche 1 bis 5 durchführt.

7. System umfassend:

ein Mittel zum Tokenisieren eines Satzes von Leitinformation, die in einer elektronischen Meldung enthalten oder dieser zugeordnet ist, um einen ersten Satz von einem oder mehreren Token zu erzeugen (110), wobei der Satz von Leitinformation eine Mehrzahl von Kopffeldern (1101, 1102, 1108, 310) ist;

ein Mittel zum Vergleichen des ersten Satzes von einem oder mehreren Token mit einem zweiten Satz von einem oder mehreren Token, die eine vorbestimmte Kategorie repräsentieren, unter Anwendung eines quantitativen Ähnlichkeitsvergleichs (120, 140); und

ein Mittel zum Klassifizieren der elektronischen Meldung in die vorbestimmte Kategorie, wenn der quantitative Ähnlichkeitsvergleich zwischen dem ersten und dem zweiten Satz von einem oder mehreren Token einen vorbestimmten Schwellenwert überschreitet (165, 175),

**dadurch gekennzeichnet, dass** das Mittel zum Tokenisieren umfasst:

ein Mittel zum Analysieren des Satzes der Leitinformation (210),

ein Mittel zum Extrahieren von Leitinformation-Kopffeldnamen und/oder in den Leitinformation-Kopffeldern enthaltenen Daten und/oder einem oder mehreren Datentypen und/oder der Reihenfolge der Daten innerhalb der Leitinformation-Kopffelder und/oder der Reihenfolge der Leitinformation-Kopffelder aus dem Satz von Leitinformation (220); und

ein Mittel zum Kodieren der extrahierten Leitinformationsdaten in den ersten Satz von einem oder mehreren Token (230).

8. Das System von Anspruch 7, worin die elektronische Meldung eine elektronische Post (e-mail) ist und die Köpfe empfangene Kopffelder (310) sind.

9. Das System von Anspruch 7, worin das Mittel zum Kodieren der extrahierten Leitinformationsdaten in den ersten Satz von einem oder mehreren Token dazu ausgelegt ist, auf der Basis des Kopffeldnamens, des Informationstyps, der Reihenfolge der Information innerhalb des Kopffelds und der Reihenfolge des Kopffelds unter der Mehrzahl von Kopffeldern (230) zu kodieren.

**Revendications**

1. Procédé comprenant les étapes consistant à :

   former des jetons à partir d'un ensemble d'informations de routage qui sont contenues dans un message électronique ou associées à celui-ci, pour produire un premier ensemble d'un ou plusieurs jetons (110), l'ensemble d'informations de routage consistant en une pluralité de champs d'en-tête (1101, 1102, 1108, 310) ; comparer, à l'aide d'une comparaison de la mesure quantitative de similarité, le premier ensemble d'un ou plusieurs jetons avec un second ensemble d'un ou plusieurs jetons qui représentent une catégorie prédéterminée (120, 140) ; et classer le message électronique dans la catégorie prédéterminée si la comparaison de la mesure quantitative de similarité entre le premier et le second ensemble d'un ou plusieurs jetons dépasse un seuil prédéterminé (165, 175) ; **caractérisé en ce que** l'étape de formation des jetons comprend les étapes consistant à :

      analyser l'ensemble d'informations de routage (210) ; extraire de l'ensemble d'informations de routage au moins un élément parmi les noms des champs d'en-tête dans les informations de routage, les données contenues dans les champs d'en-tête dans les informations de routage, un ou plusieurs types de données, l'ordre des données dans les champs d'en-tête dans les informations de routage et l'ordre des champs d'en-tête dans les informations de routage (220) ; et coder les données extraites des informations de routage pour former le premier ensemble d'un ou plusieurs jetons (230).

2. Procédé selon la revendication 1, comprenant en outre l'étape consistant à :

   comparer le premier ensemble d'un ou plusieurs jetons avec de multiples ensembles d'un ou plusieurs jetons (312), chacun des multiples ensembles d'un ou plusieurs jetons (312) représentant une catégorie prédéterminée pour le classement du message électronique.

3. Procédé selon la revendication 1, dans lequel le message électronique est un courrier électronique (courriel) et les en-têtes sont les champs d'en-tête reçus (310).

4. Procédé selon la revendication 1, dans lequel les informations de routage comprennent un ou plusieurs noms d'ordinateurs hôtes et une ou plusieurs adresses du protocole internet (IP) d'un ou plusieurs serveurs au travers desquels le message électronique a été routé (1110, 1112, 1118).

5. Procédé selon la revendication 1, dans lequel l'étape de codage des informations de routage extraites pour former le premier ensemble d'un ou plusieurs jetons (230) est exécutée sur la base du nom du champ d'en-tête, du type d'information, de l'ordre des informations dans le champ d'en-tête et de l'ordre du champ d'en-tête parmi la pluralité de champs d'en-tête.

6. Support accessible par machine fournissant des instructions qui, lorsqu'elles sont exécutées par un processeur, commandent au processeur d'exécuter toutes les étapes d'un procédé selon l'une quelconque des revendications 1 à 5.

7. Système comprenant :

   un moyen destiné à former des jetons à partir d'un ensemble d'informations de routage qui sont contenues dans un message électronique ou associées à celui-ci, pour produire un premier ensemble d'un ou plusieurs jetons (110), l'ensemble d'informations de routage consistant en une pluralité de champs d'en-tête (1101, 1102, 1108, 310) ; un moyen destiné à comparer, à l'aide d'une comparaison de la mesure quantitative de similarité, le premier ensemble d'un ou plusieurs jetons avec un second ensemble d'un ou plusieurs jetons qui représentent une catégorie prédéterminée (120, 140) ; et un moyen destiné à classer le message électronique dans la catégorie prédéterminée si la comparaison de la mesure quantitative de similarité entre le premier et le second ensemble d'un ou plusieurs jetons dépasse un seuil prédéterminé (165, 175) ; **caractérisé en ce que** le moyen de formation des jetons comprend :

      un moyen destiné à analyser l'ensemble d'informations de routage (210) ; un moyen destiné à extraire de l'ensemble d'informations de routage au moins un élément parmi les noms des champs d'en-tête dans les informations de routage, les données contenues dans les champs d'en-tête dans les informations de routage, un ou plusieurs types de données, l'ordre des données dans les champs d'entête dans les informations de routage et l'ordre des champs d'en-tête dans les informations de routage (220) ; et

un moyen destiné à coder les données extraites des informations de routage pour former le premier ensemble d'un ou plusieurs jetons (230).

8. Système selon la revendication 7, dans lequel le message électronique est un courrier électronique (courriel) et les champs d'en-tête sont les champs d'en-tête reçus (310).

9. Système selon la revendication 7, dans lequel le moyen de codage des données d'informations de routage extraites pour former le premier ensemble d'un ou plusieurs jetons (230) est conçu pour coder sur la base du nom du champ d'en-tête, du type d'information, de l'ordre des informations dans le champ d'en-tête et de l'ordre du champ d'en-tête parmi la pluralité de champs d'en-tête (230).

**9**

Tokenize Headers In An Electronic
Communication To Generate A First
Set Of Tokens 110

Compare The First Set Of Tokens
With A Second Set Of Tokens
(e.g., A WhiteList) 120

Similarity>
First Threshold?
130 — Yes → Set A First Flag 135

No

Compare The First Set Of Tokens
With A Third Set Of Tokens (e.g.,
A BlackList) 140

Similarity>
Second Threshold?
150 — Yes → Set A Second Flag 155

No

Electronic Communication
In First Predetermined
Category (e.g., Legitimate
Newsletter) 165 ← First Flag
Set And Second
Flag Not
Set?

Electronic Communication
In Second Predetermined
Category (e.g., Spam) 175 ← Second
Flag Set And First
Flag Not
Set?

Cannot Determine Classification Of
Electronic Communication 101 Yet;
May Rely On Another Filter 180

FIG. 1A

FIG. 1B

To Tokenize A Header In An
Electronic Communication

Parse The Header
**210**

Extract From The Header The Following:
- Header Name(s),
- Information (e.g., IP Addresses, Hostnames),
- Information Types,
- Order Of The Header Among Other Headers In The
Electronic Communication, And/Or
- Order Of The Information Within The Header, Etc.
**220**

Encode The Extracted
Into A Set Of One Or
More Tokens **230**

# FIG. 2

EP 1 733 521 B1

310

Received: from munitions2.xs4all.nl ([127.0.0.1])
by ubik.vipul.net with esmtp (Exim 3.33 #1)
id 19BHXN-00065H-00; Thu, 01 May 2003 19:08:01 +0200

Received: from giasbg01.bsnl.net.in ([202.54.12.17])
by ubik.vipul.net with esmtp (Exim 3.33 #1)
id 19BHWo-000652-00
for silklist@lists.vipul.net; Thu, 01 May 2003 19:07:27 +0200

Received: from madman. vsnl.net (PPP-219-65-141-169.bng.vsnl.net.in
[219.65.141.169]) by giasbg01.vsnl.net.in (Postfix)
with ESMTP id 910E6D7CB for <silklist@lists.vipul.net>;
Thu, 1 May 2003 23:38:45 +0500 (GMT +0500)

# FIG. 3A

(Based On Top Received Header)  — 312
1. From-helo-1-host-part-2-xs4all
2. From-helo-1-host-part-1-nl
3. From-conn-1-ip-part-1-127
4. From-conn-1-ip-part-2-0
5. From-conn-1-ip-part-3-0
6. By-1-host-part-2-vipul
7. By-1-host-part-1-net

(Based On second Received Header)
8. From-helo-2-host-part-3-vsnl
9. From-helo-2-host-part-2-net
10. From-helo-2-host-part-1-in
11. From-conn-2-ip-part-1-202
12. From-conn-2-ip-part-2-54
13. From-conn-2-ip-part-3-12
14. By-2-host-part-2-vipul.net
15. By-2-host-part-1-net
16. For-2-silklist@lists.vipul.net

(Based On third Received Header)
17. From-helo-3-host-part-2-vsnl
18. From-helo-3-host-part-1-net
19. From-conn-3-host-part-4-bng
20. From-conn-3-host-part-3-vsnl
21. From-conn-3-host-part-2-net
22. From-conn-3-host-part-1-in
23. From-conn-3-ip-part-1-219
24. From-conn-3-ip-part-2-65
25. From-conn-3-ip-part-3-141
26. By-3-host-part-32-vsn
27. By-3-host-part-2-net
28. By-3-host-part-1-in
29. For-3-<silklist@lists.vipul.net>;

# FIG. 3B

FIG. 4

EP 1 733 521 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03071753 A